# EUROPÄISCHE PATENTSCHRIFT

(11) **EP 3 151 475 B1**
(45) Veröffentlichungstag und Bekanntmachung des Hinweises auf die Patenterteilung: **06.06.2018**
(21) Anmeldenummer: 16191513.7
(22) Anmeldetag: 29.09.2016
(51) Int. Cl.: H04L 12/403

(54) **VERFAHREN ZUR ASYNCHRONEN DATENKOMMUNIKATION IN EINEM ECHTZEITFÄHIGEN ETHERNET-DATENNETZWERK**
METHOD FOR ASYNCHRONOUS DATA COMMUNICATION IN A REAL-TIME ETHERNET DATA NETWORK
PROCÉDÉ DE COMMUNICATION DE DONNÉES ASYNCHRONE DANS UN RÉSEAU DE DONNEES ETHERNET EN TEMPS RÉEL

(30) Priorität: 01.10.2015 AT 508322015
(43) Veröffentlichungstag der Anmeldung: 05.04.2017
(73) Patentinhaber: B&R Industrial Automation GmbH, 5142 Eggelsberg (AT)
(72) Erfinder: Bruckner, Dietmar, 5102 Anthering (AT); Prenninger, Franz, 5261 Helpfau-Uttendorf (AT); Avramov, Bernadette, 5261 Uttendorf (AT)
(74) Vertreter: Patentanwälte Pinter & Weiss OG

(56) Entgegenhaltungen:
- WO-A1-2013/178274
- DE-A1-102012 210 243
- US-A1- 2010 057 388
- US-A1- 2015 102 943

## Beschreibung

Die gegenständliche Erfindung betrifft ein Verfahren zur asynchronen Datenkommunikation in einem echtzeitfähigen Ethernet-Datennetzwerk, in dem zumindest ein Master über ein geschaltetes Ethernet-Datennetzwerk mit einer Anzahl von Slaves verbunden wird und für die Ethernet-Datenkommunikation ein Sendezyklus mit vorgegebener Zykluszeit vorgegeben ist, wobei der Sendezyklus in einen isochronen Abschnitt und einen asynchronen Abschnitt aufgeteilt wird und die Echtzeit-Datenkommunikation im isochronen Abschnitt implementiert wird und der asynchrone Abschnitt für eine Datenkommunikation zwischen Master und Slaves verwendet wird.

In einem Datennetzwerk zur Datenkommunikation ist ein Netzwerkprotokoll implementiert, mit dem Daten in Datenpaketen auf dem Datennetzwerk zwischen den mit dem Datennetzwerk verbundenen Netzwerkknoten übertragen werden. Das heute wohl bekannteste und am weitesten verbreitete Netzwerkprotokoll ist das Ethernet-Protokoll. Ethernet definiert hierzu Datenpakete (auch Datenframe oder Ethernetframe genannt), in denen Daten eines übergeordneten Kommunikationsprotokolls in einem Ethernet-Datenpaket gekapselt übertragen werden können. Hierbei können in einem Ethernet-Datenpaket Daten des Kommunikationsprotokolls mit einer Datenlänge zwischen 46 und 1500 Byte übertragen werden. Die Adressierung im Ethernet-Protokoll erfolgt über die MAC (Media Access Control) Adressen der Netzwerkknoten, die für jedes Netzwerkgerät eindeutig vergeben ist. Ethernet ist aus Sicht des bekannten OSI-Schichtmodells ausschließlich auf den Schichten 1 und 2 implementiert. In den höheren Schichten können verschiedene Kommunikationsprotokolle implementiert sein. Hierbei hat sich eine Vielzahl von Kommunikationsprotokollen etabliert, wie beispielsweise IP auf Schicht 3 oder TCP und UDP auf Schicht 4, um einige weit verbreitete Kommunikationsprotokolle zu nennen.

Hardwaremäßig sind heutige Ethernetsysteme sogenannte geschaltete Datennetzwerke, in denen einzelne Netzwerkknoten nicht direkt miteinander verbunden sein müssen und nicht direkt miteinander kommunizieren können müssen, sondern über Kopplungselemente, sogenannte Netzwerkswitches oder Netzwerkhubs, verbunden sein können. Ein Kopplungselement hat hierzu eine Anzahl von Netzwerkports, an die ein Netzwerkteilnehmer (entweder ein Netzwerknoten oder ein anderes Kopplungselement) angeschlossen werden kann. Ein solches Kopplungselement leitet ein Ethernet-Datenpaket entweder an alle Ports (Hub) oder an (einen) bestimmte(n) Port(s) (Switch) weiter. Damit werden in einem geschalteten Datennetzwerk sogenannte Punkt-zu-Punkt Verbindungen hergestellt, bei denen Ethernet-Datenpakete von einem Netzwerkknoten über eine Anzahl von Kopplungselementen an einen anderen Netzwerkknoten weitergeleitet werden.

Netzwerkknoten, die in der industriellen Automatisierung eingesetzt werden, haben oftmals intern einen 3-Port-Switch verbaut, wobei zwei Ports von außen zugänglich sind und der dritte Port zur internen Verschaltung dient. Damit lassen sich ohne zusätzliche externe Kopplungselemente Linientopologien realisieren, in denen ein Netzwerkknoten mit dem jeweils nächsten Netzwerkknoten in Form einer Linie verbunden ist, was im industriellen Umfeld hilft, den Verkabelungsaufwand zu reduzieren. Selbstverständlich können aber auch externe Netzwerkswitches oder externe Netzwerkhubs zum Aufbau der Netzwerktopologie eingesetzt werden. Grundsätzlich ist jede Netzwerktopologie möglich, also insbesondere eine Sterntopologie, eine Linientopologie, eine Baumtopologie, eine Ringtopologie, usw. und auch beliebige Kombination daraus. Bei einer Ringtopologie sind bekanntermaßen in der Regel spezielle Vorkehrungen zu treffen, um das unkontrollierte Zirkulieren von Datenpaketen mit Mehrfachadresse zu verhindern.

Um Ethernet auch zur industriellen Automatisierung einsetzen zu können, wurden bereits echtzeitfähige Ethernet-Protokolle entwickelt, da das Standard Ethernet-Netzwerkprotokoll bekanntermaßen nicht echtzeitfähig ist. Beispiele bekannter echtzeitfähiger Ethernet-Netzwerkprotokolle sind Modbus/TCP, Ethernet/IP, ProfiNET IRT, EtherCAT oder Ethernet POWERLINK, um nur einige zu nennen. In diesem Zusammenhang spricht man auch oftmals von Industrial Ethernet. Mit diesen echtzeitfähigen Ethernet-Protokollen soll eine für die jeweilige Anwendung ausreichend schnelle und deterministische Datenkommunikation sichergestellt werden. Es soll damit also insbesondere sichergestellt werden, dass ein echtzeitrelevantes Datenpaket innerhalb einer vorgegebenen Zeitspanne von einem sendenden Netzwerkknoten über das Netzwerk zu einem empfangenden Netzwerkknoten übertragen wird. In einer industriellen Automatisierungsumgebung bedeutet Echtzeitfähigkeit z.B., dass zwischen der Erfassung eines Messwertes, Weiterleitung des Messwertes an eine Regelungseinheit, Berechnung eines Stellwertes in der Regelungseinheit aufgrund des Messwertes und Übertragen des Stellwertes an einen Aktuator zur Durchführung einer Handlung eine fest vorgegebene Zeitspanne einzuhalten ist. Bezogen auf das echtzeitfähige Ethernet-Datennetzwerk zur Übertragung dieser Daten über das echtzeitfähige Ethernet-Datennetzwerk muss dabei die Datenübertragung innerhalb einer vorgegebenen Zeitspanne sichergestellt sein.

In einer industriellen Automatisierungsumgebung gibt es meist zumindest einen Master-Netzwerkknoten (in Folge auch kurz Master), der mit zumindest einem zugeordneten, in der Regel mehreren zugeordneten, Slave-Netzwerkknoten (in Folge auch kurz Slaves) kommuniziert. Zur Realisierung eines echtzeitfähigen Ethernet-Datennetzwerkes haben die bekannten echtzeitfähigen Ethernet-Netzwerkprotokolle einen Sendezyklus mit einer vorgebbaren Zykluszeit definiert, innerhalb der der Master mit jedem Slave kommunizieren kann. Das umfasst normalerweise zyklisch die Möglichkeit eines Datenpakets vom Master an jeden Slave und umgekehrt auch zumindest ein Datenpaket eines Slaves, normalerweise zumindest ein Datenpaket von jedem Slave, an den zugeordneten Master. Die erreichbare und vorab ermittelbare minimale Zykluszeit ergibt sich aus der Summe der maximalen Laufzeiten der Datenpakete. Die Laufzeiten sind im Wesentlichen hardwareabhängig und ergeben sich aus den Bitübertragungszeiten (Länge, Payload) der Datenpakete, aus der Netzwerkinfrastruktur (Verzögerungszeiten durch Kopplungselemente) und der Netzwerktopologie. Dabei sind ebenfalls noch die oben genannten Grenzen in der Größe der Ethernet-Datenpakete zu beachten.

In der konkreten Umsetzung dieses zyklischen Datenverkehrs (auch als isochroner Datenverkehr bezeichnet) unterscheiden sich die bekannten echtzeitfähigen Ethernet-Protokolle. ProfiNET und Ethernet/IP versenden beispielsweise einzelne Ethernet-Datenpakete vom Master an jeden Slave und umgekehrt. EtherCAT nutzt hingegen ein reines Summenrahmenverfahren, bei dem der Master ein Datenpaket mit Daten für alle Slaves an den ersten Slave schickt. Dieser liest seine Daten aus dem Datenpaket aus und überschreibt diese Daten mit Daten, die der Slave an den Master senden möchte. Dieses geänderte Datenpaket wird dann an den zweiten Slave gesendet, usw., bis das Datenpaket vom letzten Slave in umgekehrter Reihenfolge wieder an den Master gesendet wird. In einer anderen bekannten Implementierung des Summenrahmenverfahrens wird das Datenpaket von Master in Richtung der Slaves verkürzt, indem jeder Slave seine Daten aus dem Datenpaket entnimmt und in umgekehrter Richtung verlängert, indem jeder Slave seine Daten an das Datenpaket an den Master hinzufügt. Ein solches Summenrahmenverfahren wird von ProfiNET IRT unterstützt (Dynamic Frame Packing). EtherCAT und ProfiNET IRT erfordern zur Umsetzung dieses zyklischen Datenverkehrs jedoch spezielle Bausteine und lassen sich nicht mit Standard Ethernet Kopplungselementen realisieren. POWERLINK versendet ein Datenpaket vom Master als Summenrahmen an alle Slaves und der Master bekommt von jedem Slave ein separates Ethernet-Datenpaket retour. POWERLINK kann mit Standard Ethernet Kopplungselementen betrieben werden. Die genannten Verfahren unterscheiden sich damit ebenfalls wesentlich in den Anforderungen an die verwendete Hardware.

Dieser zyklische (isochrone) Datenverkehr, der die Basis der Echtzeitfähigkeit im echtzeitfähigen Ethernet-Netzwerkprotokoll darstellt, wird in der Regel in jedem Sendezyklus durch asynchrone (nicht zyklische) Datenpakete erweitert. Solche asynchronen Datenpakete werden von der nicht den Echtzeitanforderungen unterworfenen Datenkommunikation genutzt, beispielsweise zur Konfiguration der Slaves, zu Visualisierungszwecken oder für Statusabfragen. Für solche asynchronen Datenpakete wird Bandbreite reserviert, d.h., dass in jedem Sendezyklus eine gewisse, definierte Zeit für asynchronen Datenverkehr zur Verfügung steht. Diesen asynchronen Abschnitt eines Sendezyklus müssen sich die Netzwerkknoten aber aufteilen, wofür es in den bekannten echtzeitfähigen Ethernet-Protokollen verschiedene Ansätze gibt.

Auch in der Umsetzung des asynchronen Datenverkehrs unterscheiden sich daher die bekannten echtzeitfähigen Ethernet-Protokolle. ProfiNET erlaubt das beliebige Versenden von asynchronen Datenpaketen und verwendet dazu eine Priorisierung, mit der festgelegt wird, welche asynchronen Datenpakete zuerst behandelt werden. Das erlaubt den Kopplungselementen höherpriore Datenpakete schneller zu senden und sogar das Versenden von niederprioren Datenpaketen gegebenenfalls zu unterbrechen, um Datenpakete höherer Priorität vorzuziehen. Das bedingt aber große Datenpuffer in den Kopplungselementen, um Daten bis zur Versendung in asynchronen Datenpaketen zwischenspeichern zu können. Außerdem benötigen die Kopplungselemente damit auch eine gewisse "Intelligenz", um diese Priorisierung vornehmen zu können, womit keine Standard Kopplungselemente, wie ein herkömmlicher Ethernet Netzwerkswitch, verwendet werden können. EtherCAT hält im Summenrahmen einen Bereich für asynchrone Daten frei und der Master teilt ein, wer diesen Bereich nutzen darf. Bei POWERLINK wird ein Slave vom Master eingeladen, asynchrone Daten zu versenden. Sowohl bei EtherCAT, als auch bei POWERLINK signalisiert der Slave dem Master vorher, dass er asynchrone Daten versenden möchte. Damit können die Datenpuffer in den Kopplungselementen für asynchrone Daten eingespart werden.

In der industriellen Automatisierungsumgebung auf Basis von echtzeitfähigen Ethernet-Netzwerkprotokollen wird die asynchrone Bandbreite immer wichtiger, weil einerseits auch die echtzeitfähigen Ethernet-Netzwerke immer größer werden (im Sinne von immer mehr Netzwerkknoten), andererseits die verwendeten Netzwerkknoten immer mehr Funktionen anbieten, die nicht zyklisch aufgerufen werden müssen (z.B. Web-Server, Events, etc.). Damit wird auch mehr asynchroner Datenverkehr notwendig. Die asynchrone Bandbreite kann aber nicht beliebig erhöht werden, da damit die Zykluszeit eines Sendezyklus ansteigen würde, was wiederum die Echtzeitfähigkeit negativ beeinflussen würde.

Die WO 2013/178274 A1 offenbart ein lokales Kommunikationsnetz, bei dem sowohl snychrone als auch aysnchrone Daten übertragen werden können. Ein Master verwendet mehrere echtzeitfähige, synchrone Zeitschlitze, um synchrone Daten mit Slaves auszutauschen. Falls am Ende dieser Zeitschlitze noch Zeit übrig ist, verwendet der Master diese Zeit um nicht-echtzeitfähige Daten mit den Slaves auszutauschen.

Es ist daher eine Aufgabe der gegenständlichen Erfindung, ein Verfahren anzugeben, mit dem die verfügbare asynchrone Bandbreite eines echtzeitfähigen Ethernet Netzwerkprotokolls kollisionsfrei für asynchronen Datenverkehr besser ausgenutzt werden kann.

Diese Aufgabe wird erfindungsgemäß dadurch gelöst, dass zumindest ein Slave, der asynchrone Daten versenden möchte, dem Master in einem Sendezyklus mittels eines Anfrage-Datenpakets mitteilt, wie viele asynchrone Daten dieser Slave asynchron versenden möchte und der Master mittels eines Einladungs-Datenpakets dem Slave mitteilt, zu welchem Zeitpunkt innerhalb eines der folgenden Sendezyklen der Slave die asynchronen Daten versenden darf. Damit steuert der Master den gesamten asynchronen Datenverkehr auf dem dem Master zugeordneten Teil des echtzeitfähigen Ethernet-Datennetzwerkes. Nachdem der Master nicht nur weiß, dass ein Slave asynchrone Daten versenden möchte, sondern auch, wie viele asynchrone Daten zu versenden sind, kann der Master den asynchronen Datenverkehr während der laufenden Datenkommunikation genau planen und durchführen. Die verfügbare asynchrone Bandbreite in jedem Sendezyklus, die sich die Netzwerkknoten teilen müssen, kann damit optimal ausgenutzt werden. Tests mit diesem Verfahren auf Basis des POWERLINK Ethernet-Protokolls haben ergeben, dass (bei ansonsten gleichen Voraussetzungen) die vorhandene asynchrone Bandbreite im Schnitt um einen Faktor zwischen 5 und 10 besser ausgenutzt werden kann, d.h., dass mit dem erfindungsgemäßen Verfahren zwischen fünf- und zehnmal so viele asynchrone Daten als bisher versendet werden können.

Zusätzlich werden für dieses Verfahren keine Datenpuffer in den Kopplungselementen benötigt und es stellt keine zusätzlichen Anforderungen an die Ethernet-Hardware. Das Verfahren kann damit auch mit handelsüblichen internen und externen Kopplungselementen, wie z.B. herkömmlichen unmanaged Netzwerkswitches, ausgeführt werden.

Der Master kann den asynchronen Datenverkehr besonders flexibel planen, wenn der Master dem Slave mit dem Einladungs-Datenpaket mitteilt, in welchem der folgenden Sendezyklen der Slave die asynchronen Daten versenden darf.

Ganz besonders vorteilhaft ist es, wenn das asynchrone Datenpaket des Slaves im Sendezyklus versendet wird, der unmittelbar auf den Sendezyklus folgt, in dem der Slave das Einladungs-Datenpaket erhalten hat. Damit kann die Geschwindigkeit des asynchronen Datenverkehrs erhöht werden, da sich die Verzögerungszeit zwischen Anfrage und Absenden des asynchronen Datenpakets verringert. Die Verzögerungszeit kann noch weiter verringert werden, wenn das asynchrone Datenpaket im Sendezyklus versendet wird, in dem der Slave das Einladungs-Datenpaket erhalten hat.

Um den asynchronen Datenverkehr noch flexibler planen zu können, kann der Master dem Slave mit dem Einladungs-Datenpaket mitteilen, wie viele asynchronen Daten der Slave versenden darf. Das eröffnet auch die Möglichkeit, die angefragte Datengröße auf mehrere kleinere asynchrone Datenpakete aufzuteilen.

Wenn der Master dem Slave die Datengröße im Einladungs-Datenpaket mitteilt, kann das auch dazu genutzt werden, um einen Fehler in der Datenkommunikation zu erkennen. Dann kann auf einfache Weise die vom Slave angefragte Datengröße der asynchronen Daten mit der vom Master mitgeteilten Datengröße der asynchronen Daten verglichen werden und bei einer Abweichung ein Fehler angenommen werden.

Bevorzugt wird das Anfrage-Datenpaket des Slaves im isochronen Abschnitt des Sendezyklus versendet, da damit jeder Slave in jedem Sendezyklus die Gelegenheit hat, dem Master mitzuteilen, dass er asynchrone Datenpakete versenden möchte. Damit kann sichergestellt werden, dass jeder Slave die Gelegenheit bekommt, asynchrone Daten zu versenden.

Der asynchrone Datendurchsatz kann weiter erhöht werden, wenn der Slave mehrere Anfrage-Datenpakete versenden darf, bevor er ein Einladungs-Datenpaket für seine Anfrage bekommen hat, insbesondere, wenn er auch in einem Sendezyklus mehrere Anfrage-Datenpakete versenden darf, da der Slave damit in den folgenden Sendezyklen auch mehrere asynchrone Datenpakete versenden kann.

Es ist insbesondere vorteilhaft, wenn der Slave im folgenden Sendezyklus mehrere asynchrone Datenpakete versendet, um die verfügbare asynchrone Bandbreite optimal ausnutzen zu können.

Ebenso ist es aus Sicht des asynchronen Datenverkehrs vorteilhaft, wenn der Master das Einladungs-Datenpaket im Sendezyklus versendet, der unmittelbar auf den Sendezyklus folgt, in dem der Master das Anfrage-Datenpaket erhalten hat. Auch diese Maßnahme hilft, die Verzögerungszeit zwischen Anfrage und Absenden des asynchronen Datenpakets zu verringern.

Vorteilhafterweise hat auch der Master in einem Sendezyklus die Gelegenheit, asynchrone Datenpakete zu versenden. Damit kann auch asynchrone Kommunikation zwischen dem Master und einem Slave realisiert werden, z.B. zum Betreiben eines Web-Servers mit aktiven Elementen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 und 2 die Kommunikation auf einem echtzeitfähigen Ethernet-Datennetzwerk,
Fig.3 eine Umsetzung der erfindungsgemäßen asynchronen Datenkommunikation,
Fig.4 die erfindungsgemäße asynchrone Datenkommunikation mit einem Multicast-Datenpaket und
Fig.5 das Versenden asynchroner Datenpakete vom Master an die Slaves.

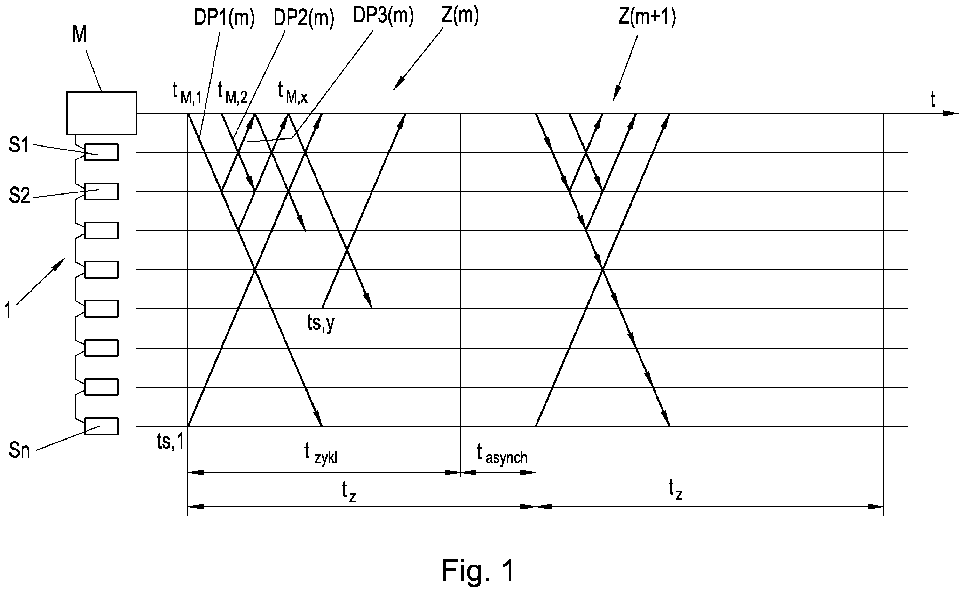

Das der Erfindung zugrunde liegende echtzeitfähige Ethernet-Netzwerkprotokoll wird anhand der Fig.1 erläutert. Hierbei wird eine beispielhafte Netzwerktopologie in Form einer Linientopologie herangezogen, in der ein Master M mit einer Reihe von in Serie geschalteten Slaves S1 ... Sn zu einem Netzwerk verbunden ist. Die Slaves S1 ... Sn sind hier als Netzwerkgeräte mit integriertem 3-Port Switch (Kopplungselement) ausgeführt, was eine solche Linientopologie ohne externe Kopplungselemente ermöglicht. Der Master M kann in jedem Sendezyklus Z, mit vorgegebener Zykluszeit t_{Z}, mit jedem Slave S1 ... Sn kommunizieren, indem am Ethernet-Datennetzwerk 1 Ethernet-Datenpakete DP (in weitere Folge einfach auch als Datenpakete DP bezeichnet) versendet werden. Ein versandtes Datenpaket DP ist in Fig.1 als Pfeil angedeutet, wobei die Pfeilspitze die Senderichtung (also von Master M zu einem Slave S oder umgekehrt) angibt. Jede waagrechte Linie ist einem Netzwerkknoten (Master M oder Slaves S1 ... Sn) zugeordnet und stellt einen Zeitstrahl dar. Die netzwerkbedingte Latenz beim Übertragen der Datenpakete DP über das Ethernet-Datennetzwerk 1 wird durch die schrägen Pfeile angedeutet, wobei die Verarbeitungsdauer der Datenpakete DP in den Kopplungselementen und die Latenz durch die endliche Ausbreitungsgeschwindigkeit im Medium (Kupferkabel, Lichtwellenleiter) zusammengefasst und vereinfacht als konstant angenommen werden.

Ein Sendezyklus Z ist zeitlich genau eingeteilt, indem die Zeitpunkte t_{M,1}, t_{M,2}, ..., t_{M,x}, t_{S,1}, ..., t_{S,y} festgelegt sind, zu denen der Master M oder die Slaves S1 ... Sn Datenpakete DP versenden dürfen. Damit können Datenkollisionen am Ethernet-Datennetzwerk 1 vermieden werden. Nachdem Ethernet eine Vollduplex-Datenkommunikation erlaubt, können aber auf einem Netzwerkabschnitt gleichzeitig Datenpakte DP in beiden Richtungen unterwegs sein. Damit weiß jeder der beteiligten Netzwerkknoten (Master M, Slaves S), zu welcher Zeit innerhalb eines Sendezyklus Z er Datenpakete DP versenden darf, und wann er welche empfangen soll.

Diese Zeitpunkte t innerhalb des Sendezyklus Z können vorab sehr genau geplant werden, wenn bekannt ist, wie viele Daten (Byte) in einem Datenpakte DP übertragen werden. Je größer das zu erwartende Datenpaket DP ist, umso weiter auseinander sind die Zeitunkte t. Ist die Datengröße vorab nicht bekannt, dann kann von einer maximalen Datengröße, z.B. der maximalen Framegröße eines Ethernetframes, ausgegangen werden. Zwischen zwei Datenpaketen DP ist auch jeweils eine vorgegebene Pause einzuhalten.

Die Anzahl der Netzwerkknoten, Master M und Slaves S1 ... Sn, und die Größe der versendeten Daten ist damit auch mitbestimmend für die erzielbare Zykluszeit t_{Z}.

In Fig.1 sendet der Master M im Sendezyklus Z(m) ein Datenpaket DP1(m) an den letzten Slave Sn. Dieses Datenpaket DP1(m) könnte aber auch ein Summenrahmen sein, der Daten für alle Slaves S1 ... Sn enthält (angedeutet im Sendzyklus Z(m+1)) und von dem die Slaves S1 ... Sn ihre Daten lesen. Zu einem festgelegten Zeitpunkt danach sendet der Master M das nächste Datenpaket DP2(m), hier z.B. an den Slave S2. Zum selben Zeitpunkt kann der Slave S2 auch ein Datenpaket DP3(m) an den Master M senden. Dieses Prinzip wird auch von den restlichen Netzwerkknoten eingehalten, wobei nicht jeder Slave S1 ... Sn ein Datenpaket DP erhalten oder senden muss. Die Kommunikation ist durch die Vorgabe der Zeitpunkte t aber vorteilhaft so geplant, dass die Datenpakete DP von den Slaves S1 ... Sn am Master M hintereinander und ohne zeitliche Lücke (abgesehen von einer einzuhaltenden Pause) eintreffen. Dieser Kommunikationsablauf wiederholt sich dann in den nachfolgenden Sendezyklen Z(m+i), wobei nicht in jedem Sendezyklus Z auch immer die gleichen Netzwerkknoten Datenpakte DP senden oder empfangen müssen, wie in Fig.1 angedeutet.

Diese geplante Datenkommunikation findet zyklisch statt und es ist in jedem Sendezyklus Z ein zeitlicher Abschnitt t_{zykl} für diesen isochronen Datenverkehr vorgesehen. In jedem Sendezyklus Z ist aber auch ein Abschnitt t_{asynch} für asynchronen Datenverkehr reserviert, in dem Ethernet-Datenkommunikation stattfindet, die keine harten Echtzeitanforderungen erfüllen muss. Wenn sich die zyklische Kommunikation von Sendezyklus zu Sendezyklus unterscheidet (wie in Fig. 1 zwischen Z(m) und Z(m+1) beispielhaft angedeutet), dann gibt es zumindest eine maximale Periodendauer (a Sendezyklus), innerhalb derer sich die Sendemuster exakt wiederholen, d. h. die zyklischen Datenpakete in Z(m) sind gleich denen in Z(m+a). In jedem einzelnen Sendezyklus Z kann sich aber das Verhältnis zwischen t_{zykl} und t_{asynch} ändern, je nach Anzahl der geplanten zyklischen Datenpakete.

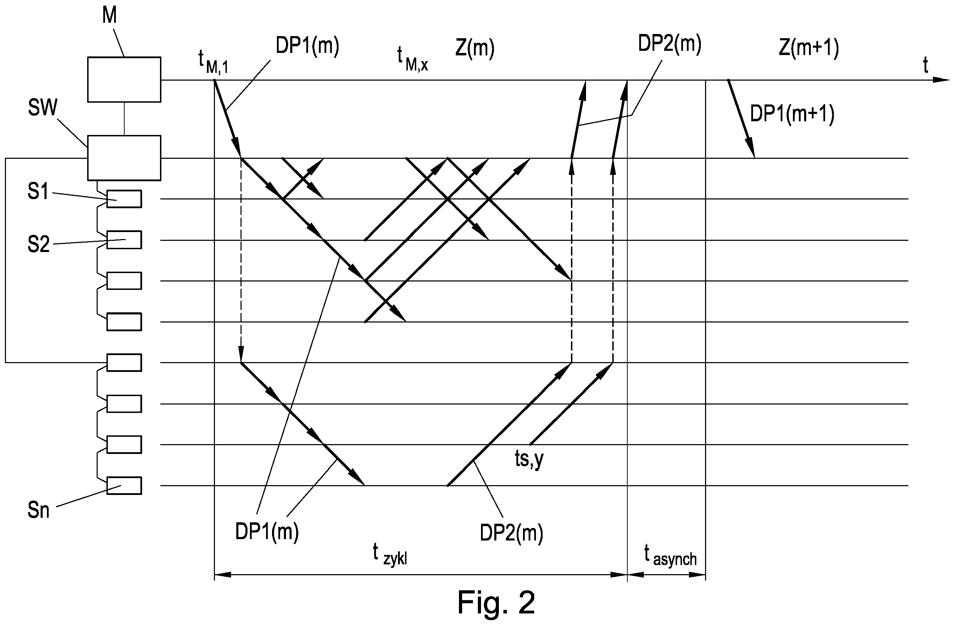

Dieses Kommunikationsprinzip gilt natürlich auch in anderen Netzwerktopologien, wie anhand von Fig.2 am Beispiel einer Sterntopologie beschrieben wird. Hier ist mittels eines externen Netzwerkswitches SW eine Sterntopologie aufgebaut, wobei in jedem Zweig eine Linientopologie, wie in der Fig.1 beschrieben, realisiert ist. Der Master M ist ebenfalls mit dem Netzwerkswitch SW verbunden. Im gezeigten Beispiel wird zum Zeitpunkt t_{M,1} zu Beginn jedes Sendezyklus Z ein Datenpaket DP1(m) in Form eines Summenrahmens an alle Slaves S1 ... Sn gesendet. Dieses Datenpaket DP1(m) wird vom Netzwerkswitch SW in die beiden Zweige weitergeleitet und dort an alle Slaves S1 ... Sn gesendet. Die anderen Datenpakete DP werden dann wieder zu den dafür vorgesehenen Zeitpunkten t_{M,x}, t_{S,y} innerhalb des Sendezyklus Z(m) versendet. Hier ist allerdings zu bedenken, dass die Datenpakete DP, die von den Slaves S1 ... Sn an den Master M zurückgesendet werden, vorzugsweise so zu planen sind, dass im Master M und im dazwischenliegenden Netzwerkswitch SW keine Datenstaus entstehen können. Der Zeitpunkt des Datenpaketes DP2(m) vom Slave Sn an den Master M ist z.B. so geplant, dass dieses Datenpaket DP2(m) nicht mit anderen Datenpaketen aus dem anderen Zweig der Sterntopologie kollidiert, wie in Fig.2 dargestellt. Die zwischen Master M und Netzwerkswitch SW hin- und hergehenden Datenpakete DP sind zwecks Übersichtlichkeit in Fig.2 nur teilweise dargestellt.

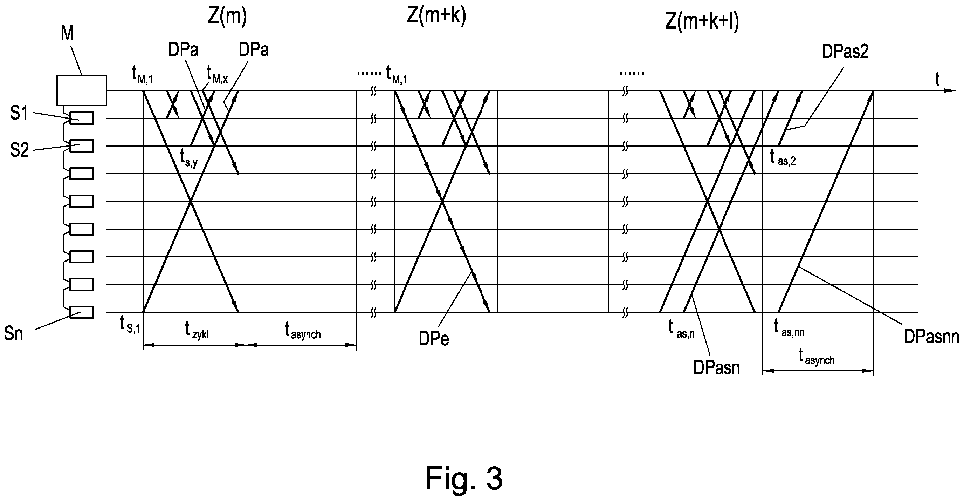

Das erfindungsgemäße Verfahren zur asynchronen Datenkommunikation wird nachfolgend anhand Fig.3 erläutert. Hierbei wird, ohne Beschränkung der Allgemeinheit, wieder von einer einfachen Linientopologie wie in Fig.1 ausgegangen. Im zyklischen Abschnitt t_{zykl} des Sendezyklus Z(m) findet wieder die oben beschriebene, zeitlich festgelegte isochrone Datenkommunikation statt. Für die asynchrone Datenkommunikation ist nun im zyklischen Abschnitt des Netzwerkprotokolls ein Anfrage-Datenpaket DPa vorgesehen, mit dem ein Slave S dem Master M mitteilt, dass er gerne asynchrone Daten versenden möchte. Im Anfrage-Datenpaket DPa teilt der Slave dabei gleichzeitig mit, wie viele asynchrone Daten (Byte) er zu versenden hat. Dabei können in einem Sendezyklus Z(m) natürlich mehrere Slaves S solche Anfrage-Datenpakete DPa versenden. Im Beispiel nach Fig.3 versenden z.B. die Slaves S2 und Sn ein solches Anfrage-Datenpaket DPa.

Der Master M sammelt nun diese Anfrage-Datenpakete DPa und wertet diese aus. Dabei kann der Master M auch Anfrage-Datenpakete DPa mehrerer aufeinander folgender Sendezyklen Z sammeln und auswerten. Die Auswertung erfolgt dabei derart, dass der Master M berechnet, welche Slaves S1 ... Sn zu welchen Zeitpunkten tₐₛ innerhalb eines Sendezyklus Z ihre asynchronen Daten senden dürfen. Der Master M kann den verfügbaren asynchronen Zeitabschnitt innerhalb des Sendezyklus Z genau planen, da er weiß, welche Datenpaketgrößen die Slaves S1 ... Sn isochron senden werden und asynchron versenden möchten. Die Prioritätssteuerung, also welcher Slave Datenpakete DP versenden darf, wenn es mehr Anfragen als verfügbare Bandbreite gibt, liegt vollständig beim Master M. Die Priorität der einzelnen asynchronen Datenpakete DP eines Slaves S allerdings liegen in der Verantwortung des Slaves S selber, d.h. jede Slave S entscheidet selbst, welche seiner asynchronen Daten zuerst gesendet werden sollen. Der Master M bearbeitet die Anfragen eines jeden Slaves S vorzugsweise der Reihe nach.

Nach Auswertung der Anfragen sendet der Master M in einem der nächsten Sendezyklen Z(m+k) ein Einladungs-Datenpaket DPe an die Slaves S1 ... Sn, die er zum Versenden von asynchronen Daten einlädt. Vorzugsweise kann der Master M das Einladungs-Datenpaket DPe auch im unmittelbar nächsten Sendezyklus Z(m+1), also k=1, versenden, nachdem er Anfrage-Datenpaket(e) DPa im Sendezyklus Z(m) davor erhalten hat.

Im Einladungs-Datenpaket DPe ist dabei enthalten, in welchem Sendezyklus Z(m+k+l) und zu welchem Zeitpunkt tₐₛ innerhalb dieses Sendezyklus Z(m+k+l) jeder Slave S1 ... Sn seine asynchronen Daten senden darf. Falls nach Erhalt des Einladungs-Datenpakets DPe immer im unmittelbar nächsten Sendezyklus Z(m+k+1) oder immer im nächsten I-ten Sendezyklus Z(m+k+l) die asynchronen Daten versendet werden, muss im Einladungs-Datenpakets DPe diese Information nicht unbedingt enthalten sein. Vorteilhaft ist in diesem Zusammenhang, wenn die asynchronen Daten immer im unmittelbar nächsten Sendezyklus Z(m+k+1), also I=1, versendet werden. Ganz besonders vorteilhaft ist es hierbei, wenn die asynchronen Daten noch im selben Sendezyklus Z(m+k), in dem das Einladungs-Datenpaket DPe empfangen wurde, also I=0, versendet werden.

Das Einladungs-Datenpaket DPe kann dabei vorteilhafterweise als Summenrahmen ausgeführt sein (wie in Fig.3 angedeutet), in dem für jeden Slave S1 ... Sn enthalten ist, in welchem Sendezyklus Z(m+k+l) und wann innerhalb dieses Sendezyklus Z(m+k+l) er seine asynchronen Daten senden darf.

Das Einladungs-Datenpaket DPe kann dabei an einer beliebigen (aber festgelegten) Stelle im Sendezyklus Z(m+k) versendet werden und muss nicht unbedingt am Beginn eines Sendezyklus Z(m+k) versendet werden, wie in Fig.3 dargestellt. Insbesondere kann das Einladungs-Datenpaket DPe auch im asynchronen Abschnitt t_{asynch} und auch am Ende des Sendezyklus Z(m+k) versendet werden. Ebenso können in einem Sendezyklus Z(m+k) auch mehrere Einladungs-Datenpakete DPe versendet werden.

Im Beispiel nach Fig.3 versendet der Master im Sendezyklus Z(m+k) zum Zeitpunkt t_{M,1} das Einladungs-Datenpaket DPe, hier in Form eines Summenrahmens, mit dem er den Slaves S2, Sn mitteilt, in welchen Sendezyklus Z(m+k+l) und zu welcher Zeit t_{as,2}, t_{as,n}, t_{as,nn} innerhalb dieses Sendezyklus Z(m+k+l) diese ihre gewünschten asynchronen Daten in einem asynchronen Datenpaket DPas, hier asynchrone Datenpakete DPas2, DPasn, DPasnn, versenden dürfen.

Dabei kann der Master M den Slaves S2, Sn auch mitteilen, wie viele Daten asynchron versendet werden dürfen. Damit kann ein Slave S aufgefordert werden, nur ein Teil der angefragten asynchronen Daten zu versenden. Für die restlichen Daten kann der Salve S dann wieder ein Anfrage-Datenpaket DPa versenden. Das Mitteilen der Größe der Daten kann aber auch zur Fehlererkennung verwendet werden. Wenn ein Slave S eine Einladung für eine Datengröße bekommt, die nicht seiner Anfrage entspricht, kann der Slave von einem Fehler ausgehen und ein neues Anfrage-Datenpaket DPa schicken und damit auch dem Master M signalisieren, dass ein Fehler passiert ist.

Hierbei ist zu beachten, dass der Master M die asynchrone Datenkommunikation zur Vermeidung von Kollisionen mit dem isochronen Datenverkehr vorzugsweise so plant, dass die asynchronen Daten von den Slaves S1 ... Sn im asynchronen Abschnitt t_{asynch} beim Empfänger, hier dem Master M, ankommen. Das bedeutet, dass ein Slave Sn ein asynchrones Datenpaket DPasn auch im zyklischen Abschnitt t_{zyk} des Sendezyklus Z(m+k+l) absenden darf, wenn das zu keinen Kollisionen im Ethernet-Datennetzwerk 1 führt, wie in Fig.3 dargestellt.

Ebenso ist es möglich, dass ein Slave Sn in einem Sendezyklus Z(m+k+l) auch mehrmals asynchrone Datenpakete DPasn, DPasnn versendet, wie in Fig.3 dargestellt, wenn sich das innerhalb der verfügbaren asynchronen Bandbreite ausgeht. Damit können z.B. auch große asynchrone Daten DPas von einem Slave S an den Master M gesendet werden.

Grundsätzlich sind im Ethernet-Netzwerkprotokoll auch Datenpakete DP möglich, die von einem Slave S an mehrere andere Netzwerkknoten, Master M oder Slaves S1 ... Sn, versendet werden sollen, ein sogenanntes Multicast-Datenpaket DPmc. Das trifft im Wesentlichen auch auf die asynchrone Datenkommunikation zu. Der Master M weiß beim Planen der asynchronen Datenkommunikation aber an sich nicht, ob ein Slave, der einen Wunsch nach asynchronem Datenverkehr angemeldet hat, ein Multicast-Datenpaket DPmc versenden möchte, oder die asynchronen Daten nur an den Master M senden möchte. Ein Slave S1 ... Sn könnte nun im Anfrage-Datenpaket DPa dem Master M mitteilen, dass er ein Multicast-Datenpaket DPmc versenden möchte. Oder der Master M berücksichtigt in der Planung der asynchronen Datenkommunikation immer die Möglichkeit von Multicast-Datenpaketen DPmc. In jedem Fall plant der Master M die asynchrone Datenkommunikation so, dass es zu keinen Kollisionen am Ethernet-Datennetzwerk 1 kommt.

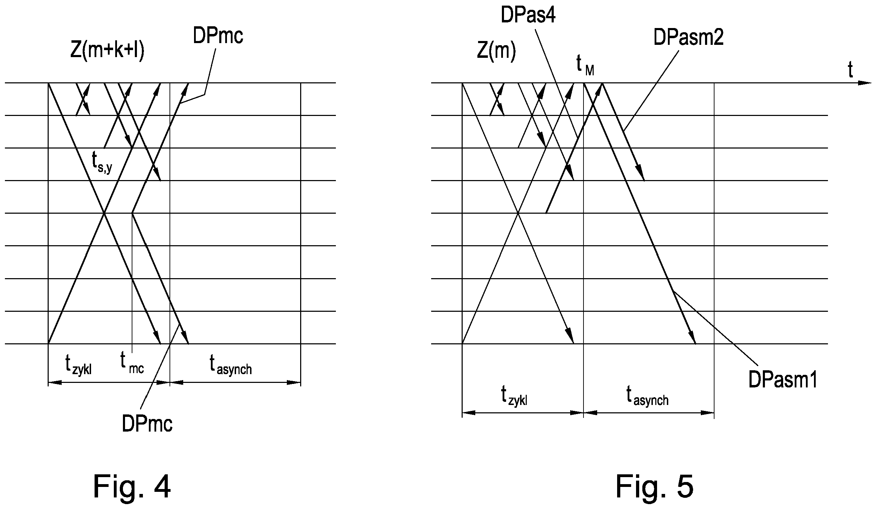

In Fig.4 ist das Versenden eines asynchronen Multicast-Datenpakets DPmc dargestellt, wobei die ganze, bereits beschriebene Vorgeschichte, also Anfrage-Datenpaket DPa und Einladungs-Datenpaket DPe, der Einfachheit halber weggelassen wurde. In diesem Beispiel hat der Master M den Zeitpunkt t_{mc} für das Multicast-Datenpaket DPmc so geplant, dass es zu keinen Kollisionen im Ethernet-Datennetzwerk 1 kommt und dass das Multicast-Datenpaket DPmc im asynchronen Abschnitt t_{asynch} des Sendezyklus Z(m+k+l) beim Master M ankommt.

Ebenso kann natürlich auch der Master M selbst asynchrone Datenpakete DPasm an die Slaves S1 ... Sn versenden, wie in Fig.5 dargestellt. Auch hier muss der Master M die Absendezeitpunkte t_{M} dieser asynchronen Datenpakete DPasm so planen, dass diese innerhalb des asynchronen Abschnittes t_{asynch} des Sendezyklus Z(m) beim Empfänger, hier den (oder einem oder einer Gruppe der) Slaves S1 ... Sn, ankommen. Die asynchronen Datenpakete DPasm des Masters M können dabei auch innerhalb des zyklischen Abschnitts t_{zykl} abgesendet werden.

Die Planung des asynchronen Datenverkehrs könnte im Master M beispielsweise wie folgt ablaufen.

Wenn der Master M weiß, dass alle Slaves S1 ... Sn nur an ihn asynchrone Datenpakete DPas versenden möchten und es keinen Datenverkehr zwischen den Slaves S1 ... Sn (ohne Master M) gibt, ist es ausreichend, die Sendezeitpunkte tₐₛ der asynchronen Datenpakete DPas der Slaves S1 ... Sn so zu berechnen, dass unter Berücksichtigung der bekannten topologieabhängigen Laufzeiten der asynchronen Datenpakete DPas durch das Ethernet-Datennetzwerk 1 diese möglichst ohne Lücke beim Master M ankommen. Da der Master M die isochrone Kommunikation im zyklischen Abschnitt t_{zykl} kennt, besitzt er eine Liste mit freien Zeitschlitzen innerhalb eines Sendezyklus Z(m+k+l), die er für asynchronen Datenverkehr verplanen kann.

In allen anderen Fällen muss der Master M auf allen Verbindungen der bekannten Netzwerktopologie prüfen, ob zur Laufzeit des asynchronen Datenpakets DPas, DPasm kein anderes Datenpaket DP, synchron oder asynchron, bereits in dieselbe Richtung eingeplant ist, und gegebenenfalls das asynchrone Datenpaket DPas, DPasm zeitlich entsprechend verschieben.

Diese Berechnungen der Laufzeiten sind recht einfache arithmetische Aufgaben (im Wesentlichen werden Laufzeiten addiert), die im Master M einfach und ohne großen Rechenaufwand berechnet werden können, da der Master M die Netzwerktopologie und die einzelnen Laufzeiten an den Verbindungen zwischen den Netzwerkknoten kennt.

Der Master M kann auch eine maximale Größe eines asynchronen Datenpakets DPas, DPasm berücksichtigen. Die maximale Größe ergibt sich daraus, dass ein Datenpaket DPas, DPasm nur so groß sein darf, dass dieses asynchrone Datenpaket DPas, DPasm in einem Sendezyklus Z von einem beliebigen Netzwerkknoten an einen beliebigen anderen Netzwerkknoten gesendet werden kann. Gegebenenfalls muss ein asynchrones Datenpaket DPas, DPasm auch auf mehrere Datenpakete aufgeteilt werden, wenn die zu versendenden asynchronen Daten zu groß sind.

Die Slaves S1 ... Sn können mittels Anfrage-Datenpakete DPa so lange asynchrone Sendeplätze vom Master M anfordern, bis sie vom Master M mittels Einladungs-Datenpaket DPe tatsächlich einen Sendeplatz in einem Sendezyklus Z zugeteilt bekommen. Vorteilhafterweise senden die Slaves S noch eine laufende Nummer mit jedem Anfrage-Datenpaket DPa. Dadurch kann ein Slave S mehrere verschiedene Anfragen an den Master M schicken, noch bevor die Einladung für das erste asynchrone Datenpaket DPas beim Slave S wieder ankommt.

Durch ständiges Wiederholen aller noch offenen Anfragen sind Master M und Slave S in der Lage, Fehlerfälle zu erkennen und gegebenenfalls den Anfrage-Einladungsablauf neu zu starten, z.B. nach einer Anzahl von erfolglosen Versuchen.

## Patentansprüche

1. Verfahren zur asynchronen Datenkommunikation in einem echtzeitfähigen Ethernet-Datennetzwerk (1), in dem zumindest ein Master (M) über das Ethernet-Datennetzwerk (1) mit einer Anzahl von Slaves (S1, ..., Sn) verbunden wird und für die Ethernet-Datenkommunikation ein Sendezyklus (Z) mit vorgegebener Zykluszeit (t_{z}) vorgegeben ist, wobei der Sendezyklus (Z) in einen isochronen Abschnitt (t_{zykl}) und einen asynchronen Abschnitt (t_{asynch}) aufgeteilt wird und die Echtzeit-Datenkommunikation im isochronen Abschnitt (t_{zykl}) implementiert wird und der asynchrone Abschnitt (t_{asynch}) für eine asynchrone Datenkommunikation zwischen Master (M) und Slaves (S1, ..., Sn) verwendet wird, **dadurch gekennzeichnet, dass** zumindest ein Slave (S1, ..., Sn), der asynchrone Daten versenden möchte, dem Master (M) in einem Sendezyklus (Z(m)) mittels eines Anfrage-Datenpakets (DPa) mitteilt, wie viele asynchrone Daten dieser Slave (S1, ..., Sn) asynchron versenden möchte und der Master (M) mittels eines Einladungs-Datenpakets (DPe) dem Slave (S1, ..., Sn) mitteilt, zu welchem Zeitpunkt (tₐₛ) innerhalb eines der folgenden Sendezyklen (Z(m+k+l)) der Slave (S1, ..., Sn) die asynchronen Daten in einem asynchronen Datenpaket (DPas) versenden darf.

2. Verfahren nach Anspruch 1, **dadurch gekennzeichnet, dass** der Master (M) dem Slave (S1, ..., Sn) mit dem Einladungs-Datenpaket (DPe) mitteilt, in welchem der folgenden Sendezyklen (Z(m+k+l)) der Slave (S1, ..., Sn) die asynchronen Daten versenden darf.

3. Verfahren nach Anspruch 1, **dadurch gekennzeichnet, dass** das asynchrone Datenpaket (DPas) des Slaves (S1, ..., Sn) im Sendezyklus (Z(m+k)) versendet wird, in dem der Slave (S1, ..., Sn) das Einladungs-Datenpaket (DPe) erhalten hat.

4. Verfahren nach Anspruch 1, **dadurch gekennzeichnet, dass** das asynchrone Datenpaket (DPas) im Sendezyklus (Z(m+k+1)) versendet wird, der unmittelbar auf den Sendezyklus (Z(m+k)) folgt, in dem der Slave (S1, ..., Sn) das Einladungs-Datenpaket (DPe) erhalten hat.

5. Verfahren nach einem der Ansprüche 1 bis 4, **dadurch gekennzeichnet, dass** der Master (M) dem Slave (S1, ..., Sn) mit dem Einladungs-Datenpaket (DPe) mitteilt, wie viele asynchronen Daten der Slave (S1, ..., Sn) versenden darf.

6. Verfahren nach Anspruch 5, **dadurch gekennzeichnet, dass** ein Fehler in der Ethernet-Datenkommunikation erkannt wird, wenn die vom Slave (S1, ..., Sn) angefragte Datengröße der asynchronen Daten und die vom Master (M) mitgeteilte Datengröße der asynchronen Daten voneinander abweichen.

7. Verfahren nach einem der Ansprüche 1 bis 4, **dadurch gekennzeichnet, dass** das Anfrage-Datenpaket (DPa) des Slaves (S1, ..., Sn) im isochronen Abschnitt (t_{zykl}) des Sendezyklus (Z(m)) versendet wird.

8. Verfahren nach einem der Ansprüche 1 bis 7, **dadurch gekennzeichnet, dass** der Slave (S1, ..., Sn) im Sendezyklus (Z(m)) mehrere Anfrage-Datenpakete (DPa) versendet.

9. Verfahren nach einem der Ansprüche 1 bis 8, **dadurch gekennzeichnet, dass** der Slave (S1, ..., Sn) im folgenden Sendezyklus (Z(m+k+l)) mehrere asynchrone Datenpakete (DPas) versendet.

10. Verfahren nach einem der Ansprüche 1 bis 9, **dadurch gekennzeichnet, dass** das Einladungs-Datenpaket (DPe) im Sendezyklus (Z(m+1)) versendet wird, der unmittelbar auf den Sendezyklus (Z(m)) folgt, in dem der Master (M) das Anfrage-Datenpaket (DPa) erhalten hat.

11. Verfahren nach einem der Ansprüche 1 bis 10, **dadurch gekennzeichnet, dass** das Einladungs-Datenpaket (DPe) im Sendezyklus (Z(m)) versendet wird, in dem der Master (M) das Anfrage-Datenpaket (DPa) erhalten hat.

12. Verfahren nach einem der Ansprüche 1 bis 11, **dadurch gekennzeichnet, dass** der Master (M) dem Slave (S1, ..., Sn) in einem Sendezyklus (Z(m+k)) mehrere Einladungs-Datenpakete (DPe) sendet.

13. Verfahren nach einem der Ansprüche 1 bis 12, **dadurch gekennzeichnet, dass** in einem Sendezyklus (Z(m), Z(m+k), Z(m+k+l)) zusätzlich vom Master (M) ein asynchrones Datenpaket (DPasm) an zumindest einen Slave (S1, ..., Sn) versendet wird.

14. Verfahren nach einem der Ansprüche 1 bis 13, **dadurch gekennzeichnet, dass** ein Fehler in der Ethernet-Datenkommunikation erkannt wird, wenn der Slave (S1, ..., Sn) auf ein Anfrage-Datenpaket (DPa) kein Einladungs-Datenpaket (DPe) vom Master (M) erhält.

## Claims

1. A method for asynchronous data communication in a real-time capable Ethernet data network (1), in which at least one master (M) is connected by means of the Ethernet data network (1) to a plurality of slaves (S1, ..., Sn) and for the Ethernet data communication a transmission cycle (Z) with a predetermined cycle time (t_{z}) is predetermined, wherein the transmission cycle (Z) is divided into an isochronous section (t_{zykl}) and an asynchronous section (t_{asynch}) and the real-time data communication is implemented in the isochronous segment (t_{zykl}) and the asynchronous section (t_{asynch}) is used for asynchronous data communication between master (M) and slave (S1, ..., Sn), **characterized in that** at least one slave (S1, ..., Sn) which wishes to transmit asynchronous data informs the master (M) within a transmission cycle (Z(m)) by means of a request data packet (DPa) how much asynchronous data of this slave (S1, ..., Sn) wishes to transmit asynchronously and by means of an invitation data packet (DPe) the master (M) informs the slave (S1, ..., Sn) as to the time (tₐₛ) within one of the following transmission cycle (Z(m+k+l)) at which the slave (S1, ..., Sn) is permitted to transmit the asynchronous data in an asynchronous data packet (DPas).

2. The method according to claim 1, **characterized in that** with the invitation data packet (DPe) the master (M) informs the slave (S1, ..., Sn) in which of the following transmission cycles (Z(m+k+l)) the slave (S1, ..., Sn) should transmit the asynchronous data.

3. The method according to claim 1, **characterized in that** the asynchronous data packet (DPas) of the slave (S1, ..., Sn) is transmitted in the transmission cycle (Z(m+k)) in which the slave (S1, ..., Sn) has received the invitation data packet (DPe).

4. The method according to claim 1, **characterized in that** the asynchronous data packet (DPas) is transmitted in the transmission cycle (Z(m+k+1)) which immediately follows the transmission cycle (Z(m+k)) in which the slave (S1, ..., Sn) has received the invitation data packet (DPe).

5. The method according to one of claims 4 to 4, **characterized in that** with the invitation data packet (DPe) the master (M) communicates to the slave (S1, ..., Sn) how much asynchronous data the slave (S1, ..., Sn) should transmit.

6. The method according to claim 5, **characterized in that** an error in the Ethernet data communication is recognized if the data quantity of the asynchronous data requested from the slave (S1, ..., Sn) and the data quantity of the asynchronous data communicated by the master (M) deviate from one another.

7. The method according to one of claims 1 to 4, **characterized in that** the request data packet (DPa) of the slave (S1, ..., Sn) is transmitted in the isochronous segment (t_{zykl}) of the transmission cycle (Z(m)).

8. The method according to one of claims 1 to 7, **characterized in that** the slave (S1, ..., Sn) transmits a plurality of request data packets (DPa) in the transmission cycle (Z(m)).

9. The method according to one of claims 1 to 8, **characterized in that** the slave (S1, ..., Sn) transmits a plurality of request data packets (DPas) in the following transmission cycle (Z(m+k+l)).

10. The method according to one of claims 1 to 9, **characterized in that** the invitation data packet (DPe) is transmitted in the transmission cycle (Z(m+1)) which immediately follows the transmission cycle (Z(m)) in which the master (M) has received the request data packet (DPa).

11. The method according to one of claims 1 to 10, **characterized in that** the invitation data packet (DPe) is transmitted in the transmission cycle (Z(m+1)) in which the master (M) has received the request data packet (DPa).

12. The method according to one of claims 1 to 11, **characterized in that** the master (M) sends a plurality of invitation data packets (DPe) to the slave (S1, ..., Sn) in a transmission cycle (Z(m+k)).

13. The method according to one of claims 1 to 12, **characterized in that** in a transmission cycle (Z(m), Z(m+k), Z(m+k+l)) an asynchronous data packet (DPasm) is additionally transmitted from the master (M) to at least one slave (S1, ..., Sn).

14. The method according to one of claims 1 to 13, **characterized in that** an error in the Ethernet data communication is recognized if the slave (S1, ..., Sn) receives no invitation data packet (DPe) from the master (M) in response to a request data packet (DPa).

## Revendications

1. Procédé de communication de données asynchrone dans un réseau de données Ethernet (1) en temps réel, procédé dans lequel au moins un maître (M) est relié à un certain nombre d'esclaves (S1, ..., Sn) par le biais du réseau de données Ethernet (1) et un cycle d'émission (Z) de temps de cycle prédéterminé (t_{z}) est prédéfini pour la communication de données Ethernet, le cycle d'émission (Z) étant divisé en une partie isochrone (t_{cycl}) et une partie asynchrone (t_{asynch}) et la communication de données en temps réel étant mise en oeuvre dans la partie isochrone (t_{cycl}) et la partie asynchrone (t_{asynch}) étant utilisée pour la communication de données asynchrone entre le maître (M) et les esclaves (S1, ..., Sn), **caractérisé en ce qu'au** moins un esclave (S1, ..., Sn), qui souhaiterait envoyer des données asynchrones, communique au maître (M) au moyen d'un paquet de données de requête (DPa) dans un cycle d'émission (Z(m)) combien de données asynchrones cet esclave (S1, ..., Sn) souhaiterait envoyer de façon asynchrone et le maître (M) communique à l'esclave (S1, ..., Sn) au moyen d'un paquet de données d'invitation (DPe) l'instant (tₐₛ) auquel, au cours d'un cycles d'émission (Z(m+k+l)) suivants, l'esclave (S1, ..., Sn) peut envoyer les données asynchrones dans un paquet de données asynchrone (DPas).

2. Procédé selon la revendication 1, **caractérisé en ce que** le maître (M) communique à l'esclave (S1, ..., Sn) avec le paquet de données d'invitation (DPe) celui des cycles d'émission suivants (Z(m+k+l)) dans lequel l'esclave (S1, ... ,Sn) peut envoyer les données asynchrones.

3. Procédé selon la revendication 1, **caractérisé en ce que** le paquet de données asynchrones (DPas) de l'esclave (S1, ... ,Sn) est envoyé au cours du cycle d'émission (Z(m+k)) dans lequel l'esclave (S1, ..., Sn) a reçu le paquet de données d'invitation (DPe).

4. Procédé selon la revendication 1, **caractérisé en ce que** le paquet de données asynchrones (DPas) est envoyé au cours du cycle d'émission (Z(m+k+1)) qui suit immédiatement le cycle d'émission (Z(m+k)) dans lequel l'esclave (S1, ..., Sn) a reçu le paquet de données d'invitation (DPe).

5. Procédé selon l'une des revendications 1 à 4, **caractérisé en ce que** le maître (M) communique à l'esclave (S1, ..., Sn) avec le paquet de données d'invitation (DPe) combien de données asynchrones l'esclave (S1, ..., Sn) peut envoyer.

6. Procédé selon la revendication 5, **caractérisé en ce qu'**un défaut est détecté dans la communication de données Ethernet lorsque la taille des données asynchrones, demandée par l'esclave (S1, ..., Sn), et la taille des données asynchrones communiquée par le maître (M) diffèrent l'une de l'autre.

7. Procédé selon l'une des revendications 1 à 4, **caractérisé en ce que** le paquet de donnés de requête (DPa) de l'esclave (S1,..., Sn) est envoyé dans la partie isochrone (t_{cycl}) du cycle d'émission (Z(m)).

8. Procédé selon l'une des revendications 1 à 7, **caractérisé en ce que** l'esclave (S1, ..., Sn) envoie au cours du cycle d'émission (Z(m)) une pluralité de paquets de données de requête (DPa).

9. Procédé selon l'une des revendications 1 à 8, **caractérisé en ce que** l'esclave (S1, ..., Sn) envoie au cours du cycle d'émission suivant (Z(k+m+l)) une pluralité de paquets de données asynchrones (DPas).

10. Procédé selon l'une des revendications 1 à 9, **caractérisé en ce que** le paquet de données d'invitation (DPe) est envoyé au cours du cycle d'émission (Z(m+1)) qui suit immédiatement le cycle d'émission (Z(m)) dans lequel le maître (M) a reçu le paquet de données de requête (DPa).

11. Procédé selon l'une des revendications 1 à 10, **caractérisé en ce que** le paquet de données d'invitation (DPe) est envoyé au cours du cycle d'émission (Z(m)) dans lequel le maître (M) a reçu le paquet de données de requête (DPa).

12. Procédé selon l'une des revendications 1 à 11, **caractérisé en ce que** le maître (M) envoie à l'esclave (S1, ..., Sn) au cours d'un cycle d'émission (Z(m+k)) une pluralité de paquets de données d'invitation (DPe).

13. Procédé selon l'une des revendications 1 à 12, **caractérisé en ce que,** au cours d'un cycle d'émission ((Z(m), Z(m+k), Z(m+k+l)), un paquet de données asynchrones (DPasm) est envoyé en plus par le maître (M) à au moins un esclave (S1, ..., Sn).

14. Procédé selon l'une des revendications 1 à 13, **caractérisé en ce qu'**un défaut est détecté dans la communication de données Ethernet si l'esclave (S1, ..., Sn) ne reçoit aucun paquet de données d'invitation (DPe) du maître (M) pour un paquet de données de requête (DPa).
